# EUROPEAN PATENT APPLICATION

(11) **EP 4 836 413 A1**
(43) Date of publication of application: **04.11.2026**
(21) Application number: 25305608.9
(22) Date of filing: 29.04.2025
(51) Int. Cl.: H04N 19/597, H04N 19/70, G06T 9/00

(54) **CONVEYING A 3D GAUSSIAN SPLATTING REPRESENTATION OF A SCENE VIA VOLUMETRIC DATA CODING STANDARDS**

(71) Applicant: InterDigital CE Patent Holdings, SAS, 75017 Paris (FR)
(72) Inventor: CHUPEAU, Bertrand, 35700 RENNES (FR); THUDOR, Franck, 35000 RENNES (FR); GUILLOTEL, Philippe, 35770 VERN SUR SEICHE (FR)
(74) Representative: Vossius & Partner Patentanwälte Rechtsanwälte mbB

(57) **Abstract**

Apparatuses and methods are disclosed for encoding volumetric data. Techniques disclosed include storing in atlases contained in one or more video streams Gaussian primitives of a 3DGS representation of a scene, generating a 3DGS profile including information describing the Gaussian primitives, and coding into a bitstream the one or more video streams and the 3DGS profile. Apparatuses and methods are also disclosed for decoding volumetric data. Techniques disclosed include decoding from a bitstream one or more video streams containing atlases that store Gaussian primitives of a 3DGS representation of a scene, decoding from the bitstream a 3DGS profile including information describing the Gaussian primitives, and extracting, based on the 3DGS profile, the Gaussian primitives from the atlases.

## Description

### BACKGROUND

Various volumetric representations have been proposed for New View Generation (NVG), where novel views of a scene can be synthesized from views captured by cameras. Recently, three-dimensional Gaussian splatting (3DGS) representation has emerged as a new method for scene representation. 3DGS modeling of a scene proved to produce high quality real-time rendering of new views, though requiring a large amount of data to specify the ellipsoid primitives constituting this 3DGS model. To compress the data of a 3DGS model, a video-based compression has been proposed, where the data are mapped into video streams that are then encoded by a 2D video encoder (following known standards such as the High Efficiency Video Coding (HEVC) standard or the Versatile Video Coding (VVC) standard). To decode these video streams, multiple decoder instantiations are required, setting a constraint on the decoder device's workload capacity. Currently, there is no standard to support the transport of 3DGS model data stored in multiple video streams. Hence, utilizing existing standards to transport this new representation would be beneficial in terms of acceptance and deployment.

### SUMMARY

Aspects disclosed in the present disclosure describe methods for encoding volumetric data. The methods include storing in atlases contained in one or more video streams Gaussian primitives of a 3DGS representation of a scene, generating a 3DGS profile that includes information describing the Gaussian primitives, and coding into a bitstream the one or more video streams and the 3DGS profile.

Aspects disclosed in the present disclosure also describe methods for decoding volumetric data. The methods include decoding from a bitstream one or more video streams containing atlases that store Gaussian primitives of a 3DGS representation of a scene, decoding from the bitstream a 3DGS profile including information describing the Gaussian primitives, and extracting, based on the 3DGS profile, the Gaussian primitives from the atlases.

Aspects disclosed in the present disclosure describe apparatuses for encoding a volumetric video. The apparatuses comprise at least one processor and memory storing instructions. The instructions, when executed by the at least one processor, cause the apparatuses to store in atlases contained in one or more video streams Gaussian primitives of a 3DGS representation of a scene, to generate a 3DGS profile that includes information describing the Gaussian primitives, and to code, into a bitstream, the one or more video streams and the 3DGS profile.

Aspects disclosed in the present disclosure also describe apparatuses for decoding a volumetric video. The apparatuses comprise at least one processor and memory storing instructions. The instructions, when executed by the at least one processor, cause the apparatuses to decode from a bitstream one or more video streams containing atlases that store Gaussian primitives of a 3DGS representation of a scene, to decode from the bitstream a 3DGS profile including information describing the Gaussian primitives, and to extract, based on the 3DGS profile, the Gaussian primitives from the atlases.

Aspects disclosed in the present disclosure describe a non-transitory computer-readable medium comprising instructions executable by at least one processor to perform methods for encoding volumetric data. The methods include storing in atlases contained in one or more video streams Gaussian primitives of a 3DGS representation of a scene, generating a 3DGS profile that includes information describing the Gaussian primitives, and coding into a bitstream the one or more video streams and the 3DGS profile.

Aspects disclosed in the present disclosure also describe a non-transitory computer-readable medium comprising instructions executable by at least one processor to perform methods for decoding volumetric data. The methods include decoding from a bitstream one or more video streams containing atlases that store Gaussian primitives of a 3DGS representation of a scene, decoding from the bitstream a 3DGS profile including information describing the Gaussian primitives, and extracting, based on the 3DGS profile, the Gaussian primitives from the atlases.

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

### BRIEF DESCRIPTION OF THE DRAWINGS

FIG. 1 is a block diagram of an example system, according to aspects of the present disclosure.
FIG. 2 is a block diagram illustrating a video-based compression of a 3DGS representation, according to aspects of the present disclosure.
FIG. 3 is a block diagram illustrating a decoder following the V3C standard, according to aspects of the present disclosure.
FIG. 4 is a flow diagram illustrating an example method for encoding volumetric data, according to aspects of the present disclosure.
FIG. 5 is a flow diagram illustrating an example method for decoding volumetric data, according to aspects of the present disclosure.

### DETAILED DESCRIPTION

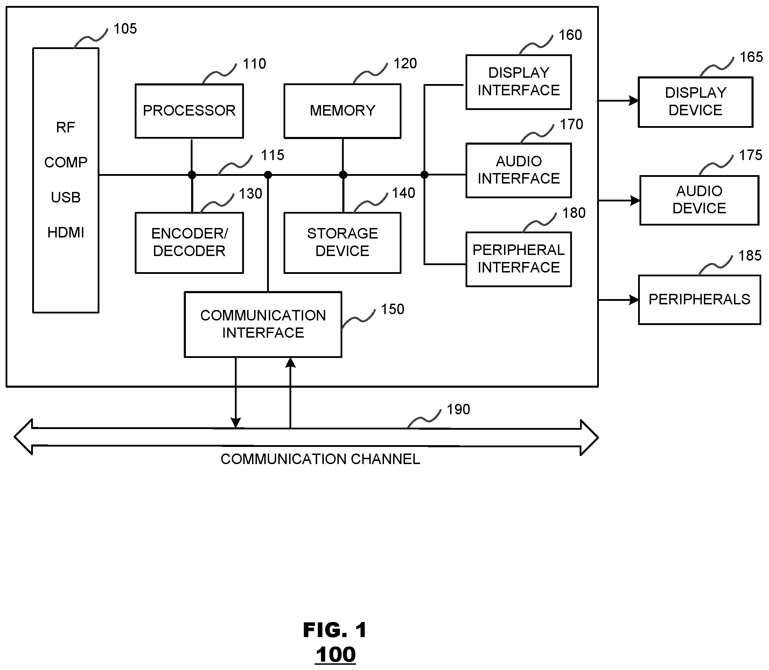

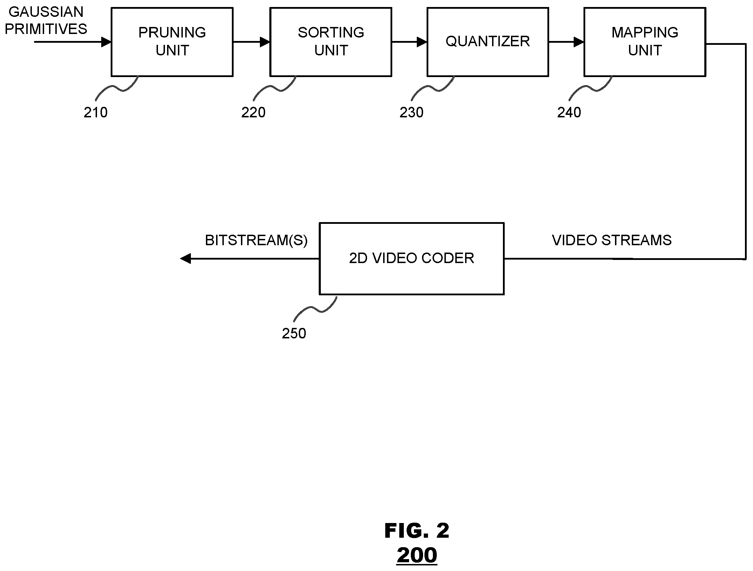

Apparatuses and methods are presented herein for encoding and for decoding volumetric data representing a scene. A system for processing and displaying content, with which various aspects and examples described herein may be implemented, is generally described in reference to FIG. 1, followed by a description of the aspects of the present disclosure in reference to FIGS. 2-5.

FIG. 1 illustrates a block diagram of an example system 100. System 100 can be embodied as a device including the various components described below and can be configured to perform one or more of the aspects described in this application. Examples of such devices, include, but are not limited to, various electronic devices such as personal computers, laptop computers, smartphones, tablet computers, digital multimedia set-top boxes, digital television receivers, personal video recording systems, connected home appliances, and servers. Elements of system 100, singly or in combination, can be embodied in a single integrated circuit, multiple integrated circuits, and/or discrete components. For example, in at least one embodiment, the processing and encoder/decoder elements of system 100 are distributed across multiple integrated circuits and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 that can be configured to execute instructions loaded therein for implementing, for example, the various aspects described in this application. Processor 110 can include embedded memory, input and output interfaces, and various other circuitries as known in the art. The system 100 includes at least one memory 120 (e.g., a volatile memory device and/or a non-volatile memory device). System 100 includes a storage device 140, which can include non-volatile memory and/or volatile memory, including, for example, EEPROM, ROM, PROM, RAM, DRAM, SRAM, flash, magnetic disk drives, and/or optical disk drives. The storage device 140 can be an internal storage device, an attached storage device, and/or a network accessible storage device, for example.

System 100 includes an encoder/decoder module 130 configured to process data to provide encoded video data or decoded video data. The encoder/decoder module 130 can include its own processor and memory. The encoder/decoder module 130 represents module(s) that can be included in a device to perform encoding and/or decoding functions. Additionally, the encoder/decoder module 130 can be implemented as a separate element of system 100 or can be incorporated within processor 110 as a combination of hardware and software as known to those skilled in the art.

Program code that is to be loaded into processor 110 or into encoder/decoder 130 to perform the various aspects described in this application can be stored in a storage device 140 and subsequently loaded into memory 120 for execution by processor 110. In accordance with various embodiments, one or more of processor 110, memory 120, storage device 140, and encoder/decoder module 130 can store one or more of various items during the performance of the processes described in this application. Such stored items can include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing functions that are needed during encoding or decoding. In other embodiments, however, memory external to the processing device (where, for example, the processing device can be either the processor 110 or the encoder/decoder module 130) can be used for one or more of these functions. The external memory can be the memory 120 and/or the storage device 140 that may comprise, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations.

The input to the elements of system 100 can be provided through various input devices as indicated in block 105. Such input devices include, but are not limited to, (i) an RF portion that receives an RF signal transmitted, for example, over the air by a broadcaster, (ii) a Composite input terminal (COMP), (iii) a USB input terminal, and/or (iv) an HDMI input terminal.

In various embodiments, the input devices of block 105 have associated respective input processing elements as known in the art. For example, the RF portion can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select, for example, a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements that perform these functions, for example, frequency selectors, signal selectors, band-limiters, channel selectors, filters, downconverters, demodulators, error correctors, and demultiplexers. The RF portion can include a tuner that performs some of these functions, including, for example, down-converting the received signal to a lower frequency (for example, an intermediate frequency or a near-baseband frequency) or to a baseband. In one set-top box embodiment, the RF portion and its associated input processing element receive an RF signal transmitted over a wired (for example, cable) medium, and perform frequency selection by filtering, down-converting, and filtering again to a desired frequency band. Various embodiments rearrange the order of the above-described (and other) elements, remove some of these elements, and/or add other elements performing similar or different functions. Added elements can include inserting elements in between existing elements, for example, inserting amplifiers and an analog-to-digital converter. In various embodiments, the RF portion includes an antenna.

Additionally, the USB and/or HDMI terminals can include respective interface processors for connecting system 100 to other electronic devices across USB and/or HDMI connections. It is to be understood that various aspects of input processing, for example, Reed-Solomon error correction, can be implemented, for example, within a separate input processing integrated circuit or within processor 110 as necessary. Similarly, aspects of USB or HDMI interface processing can be implemented within separate interface integrated circuits or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 can be provided within an integrated housing. Within the integrated housing, the various elements can be interconnected and transmit data therebetween using a suitable connection arrangement 115, for example, an internal bus as known in the art, including the I2C bus, wiring, and printed circuit boards.

The system 100 includes a communication interface 150 that enables communication with other devices via communication channel 190. The communication interface 150 can include, but is not limited to, a transceiver configured to transmit and to receive data over communication channel 190. The communication interface 150 can include, but is not limited to, a modem or network card. The communication channel 190 can be implemented, for example, within a wired and/or a wireless medium.

Data are streamed to the system 100, in various embodiments, using a Wi-Fi network such as IEEE 802.11. The Wi-Fi signal of these embodiments is received over the communication channel 190 and the communication interface 150 which are adapted for Wi-Fi communications. The communication channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 can provide an output signal to various output devices, including a display device 165, an audio device (e.g., speaker(s)) 175, and other peripheral devices 185. The other peripheral devices 185 include, in various examples of embodiments, haptic devices, one or more of a stand-alone DVR, a disk player, a stereo system, a lighting system, and other devices that provide a function based on the output of the system 100. In various embodiments, control signals are communicated between the system 100 and the display device 165, the audio device 175, or other peripheral devices 185 using signaling such as AV.link, CEC, or other communication protocols that enable device-to-device control with or without user intervention. The output devices can be communicatively coupled to system 100 via dedicated connections through respective interfaces 160, 170, and 180. Alternatively, the output devices can be connected to system 100 using the communication channel 190 via the communication interface 150. The display device 165 and the audio device 175 can be integrated in a single unit with the other components of system 100 in an electronic device, for example, a television. In various embodiments, the display interface 160 includes a display driver, for example, a timing controller (T Con) chip.

The display device 165 and the audio device 175 can alternatively be separate from one or more of the other components, for example, if the RF portion of input 105 is part of a separate set-top box. In various embodiments in which the display device 165 and the audio device 175 are external components, the output signal can be provided via dedicated output connections, including, for example, HDMI ports, USB ports, or COMP outputs.

In recent years, different volumetric representations have been proposed to be used in the context of New View Generation (NVG). That is, new views of a scene, viewed from arbitrary viewing angles, that are generated based on views that are captured by cameras (i.e., a multi-view capture). In particular, three-dimensional Gaussian splatting (3DGS) has been emerged as a new scene representation method that, based on a multi-view capture, is able to realistically render volumetric data with high quality (see, B. Kerbl et al. "3D Gaussian Splatting for Real-Time Radiance Field Rendering", ACM Transactions on Graphics (TOG), vol. 42, No. 4, July 2023, hereinafter "Kerbl"). Modeling a scene with 3DGS is advantageous since its application avoids unnecessary computations in empty spaces of the scene, thereby achieving a real-time rendering and a fast training time.

Generally, a 3DGS model represents a scene as a collection of 3D ellipsoid primitives, each represented by a 3D Gaussian function (therefore, also referred to herein as Gaussian primitives). The parameters of the Gaussian function determine the position, scale, and rotation of the 3D ellipsoid primitive that the Gaussian function represents. Each Gaussian primitive is associated with color values, representing colors of the primitive when viewed from different viewing directions in the 3D space. Each Gaussian primitive is also associated with an opacity value that controls its transparency. Thus, the parameters associated with a Gaussian primitive include position, scale, rotation, color values, and opacity value.

The unprecedented rendering performance of 3DGS is at the expense of the huge amount of data required to represent the 3D scene. Typically, several hundreds of thousands of Gaussian primitives are used to represent a static scene, requiring an order of magnitude of gigabits per second bitrate when the represented scene is dynamic. This large amount of data has motivated the research community to develop compression formats for this new 3D scene representation, in particular in the scope of MPEG.

A wide range of approaches are presented in academic literature to tackle the compression of 3DGS representations. One family of solutions shares the same paradigm of reorganizing the parameters associated with the Gaussian primitives into 2D images. When representing a dynamic scene, such 2D images are created over time for corresponding frames of respective 2D video streams. These 2D video streams can then be efficiently encoded with legacy 2D video compression, for example, according to the High Efficiency Video Coding (HEVC) standard or the Versatile Video Coding (VVC) standard. (See, e.g., Hahyun Lee and Gun Bang, "Efficient 3D/4D Gaussian Splatting Compression Using Standard 2D Video Codecs", ISO/IEC JTC 1/SC 29/WG 4 input document m70084, November 2024, Kemer, Turkey, hereinafter "Lee"). Lee's video-based compression of a 3DGS representation is generally described with respect to FIG. 2.

FIG. 2 is a block diagram illustrating a video-based compression of a 3DGS representation 200. In the example of FIG. 2, an encoder 200 comprises a pruning unit 210, a sorting unit 220, a quantizer 230, a mapping unit 240, and a 2D video coder 250. The encoder 200 receives at its input, Gaussian primitives of a 3DGS model, representing a dynamic scene over time. The Gaussian primitives are first pruned and fine-tuned, by the pruning unit 210, using Global Significance Calculation and Gaussian co-adaptation methods (see, Fan, Z., et al., Lightgaussian: Unbounded 3D Gaussian Compression with 15x Reduction and 200+ FPS, arXiv preprint, arXiv:2311.17245 (2023)). The remaining Gaussian primitives are then sorted, by the sorting unit 220, using the Parallel Linear Assignment Sorting (PLAS) method to preserve local spatial relationships (see, https://github.com/fraunhoferhhi/PLAS). Next, employing the quantizer 230, the parameters of the sorted Gaussian primitives are quantized (e.g., from an initial 32-bit floating-point values into integer values with a lower bit depth). The quantization is applied to the parameters of each Gaussian primitive, including its position, scale, rotation, opacity value, and color values. The Gaussian primitives' quantized parameters are then mapped to a 2D grid, by the mapping unit 240, to generate therefrom 2D images.

Hence, 20 images can be generated to store the parameters of the Gaussian primitives: a 3-channel image is generated to store the position values of the Gaussian primitives; a 3-channel image is generated to store the scaling values of the Gaussian primitives; a 3-channel image is generated to store the rotation values of the Gaussian primitives; a 1-channel image is generated to store the opacity values of the Gaussian primitives; and sixteen 3-channel images are generated to store the color values of the Gaussian primitives. These 2D images are associated with corresponding frames across 20 video streams that are fed into the 2D video coder 250 to be coded into bitstream(s) following an HEVC's or a VVC's format. Typically, each instantiation of the video coder 250 processes one video stream that stores one of the parameters of the Gaussian primitives. Note that the Gaussian primitives are sorted 220 to increase the spatial correlation between neighboring parameters in each of the video streams, thereby improving compression performance.

The video-based compression of a 3DGS representation (illustrated in FIG. 2) generates a large number of 2D images. And so, it may require a prohibitive number of video decoder instantiations to decode each of the video streams if transmitted in a naive way (e.g., at least 20 video streams, storing respective type of parameters of the Gaussian primitives, are to be decoded). Additionally, there is no standard to support the transport of Gaussian primitives stored in multiple video streams. Being able to utilize an existing standard to transport this new representation would be very beneficial in terms of acceptance and deployment.

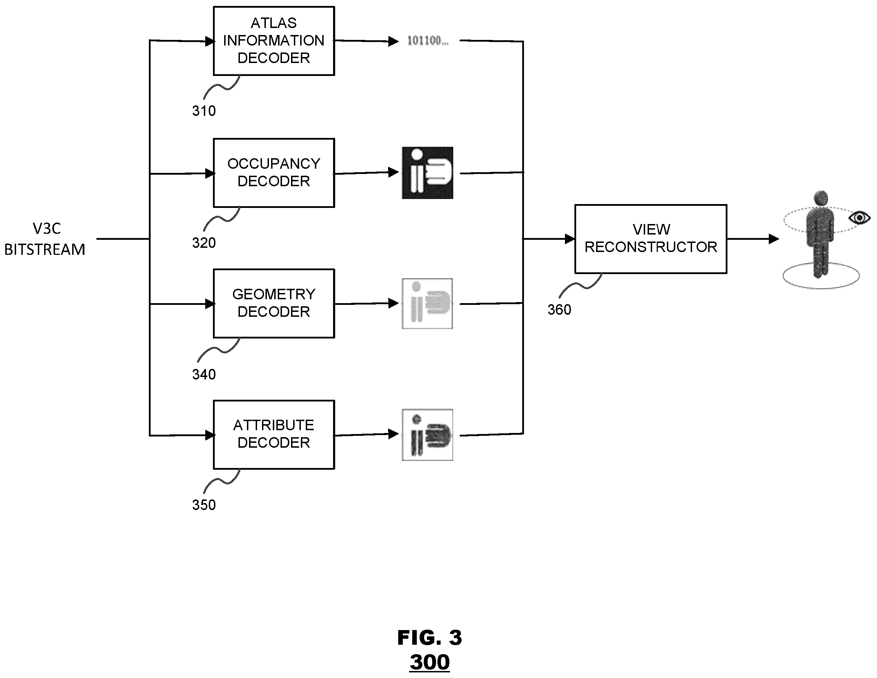

At the same time, the MPEG's V3C standard provides a generic mechanism to encode visual volumetric content by converting the 3D volumetric information into a collection of 2D videos and associated metadata (see, ISO/IEC 23090-5: 2025, "Information Technology - Coded Representation of Immersive Media - Part 5: Visual Volumetric Video-Based Coding (V3C), hereinafter the "V3C standard"). The MPEG Immersive Video (MIV) standard is an extension of the V3C standard that supports multiview + depth (MVD) as well as multi-plane image (MPI) 3D input formats (see, ISO/IEC 23090-12: 2023, "Information Technology - Coded Representation of Immersive Media - Part 12: MPEG Immersive Video, hereinafter the "MIV standard"). A decoder compliant with the V3C standard is generally described with respect to FIG. 3.

FIG. 3 is a block diagram illustrating a decoder following the V3C standard 300. The decoder 300 comprises an atlas information decoder 310, an occupancy decoder 320, a geometry decoder 340, an attribute decoder 350, and a view reconstructor 360. As shown in FIG. 3, the decoder 300 receives as an input a V3C bitstream. Occupancy atlas(es), geometry atlas(es), and attribute atlas(es) are decoded from the input bitstream by the occupancy decoder 320, the geometry decoder 340, and the attribute decoder 350, respectively. Additionally, atlas information is decoded, by the atlas information decoder 310, from the input bitstream. The atlas information includes metadata describing the manner in which the 3D data, representing a scene, have been organized into 2D images (so-called atlases). Given the decoded occupancy, geometry, and attribute atlases, and their respective metadata, the view reconstructor 360 can be employed to render a view of the scene from a desired viewing direction.

Enabling a decoder V3C (or MIV) standard compliant to ingest video-based 3DGS representations (e.g., output of the mapping unit 240) would be beneficial for fast deployment as this facilitates the re-use of existing video transport infrastructure. The V3C standard and its MIV extension both feature a format that is flexible enough for that purpose.

Hence, according to aspects described herein, V3C (or MIV) tools and features can be formatted to enable the transport of a 3DGS representation of a scene via a V3C (or MIV) compliant bitstream. Means are provided herein for generating a V3C (or MIV) compliant bitstream, used to convey a video-based 3DGS representation. Such a V3C (or MIV) compliant 3DGS bitstream format is referred to herein as the "3DGS profile." Note that the V3C standard may be referred to with respect to aspects described herein, but these aspects similarly applicable to both the V3C standard and the MIV standard.

A 3DGS profile may contain only attribute video, neither occupancy video nor geometry video is used in this profile. Thus, the syntax elements of the V3C Parameter Set (VPS) syntax structure are set accordingly. That is, **vps_geometry_video_present_flag**[ atlasID ] is set to 0 to indicate that there is no geometry video for the atlas identified by atlasID; **vps_ocupancy_video_present_flag**[ atlasID ] is set to 0 to indicate that there is no occupancy video for the atlas identified by atlasID; and **vps_attribute_video_present_flag**[ atlasID ] is set to 1 to indicate that there is attribute video for the atlas identified by atlasID.

The number, dimension, and type of attributes associated with an attribute atlas should be specified as follows. **ai_attribute_count**[ atlasID ] indicates the number of attributes associated with the atlas identified by atlasID. For each attribute with index attrIdx: **ai_attribute_dimension_minus1**[ atlasID ][ attrIdx] + 1 indicates the attribute dimension, that is the number of channels; and **ai_attribute_type_id**[ atlasID ][ attrIdx ] indicates the attribute type.

As described in Kerbl, the attributes of a Gaussian primitive are as follows:
- a 3D position, represented by position values denoted by *(x, y, z);*
- color values represented by 16×3 spherical harmonic coefficients, denoted by *sh*[*k*][*c*], where *c* indicates a color component (e.g., red, green, or blue of the RGB color model) and where *k* indicates the spherical harmonic order. A spherical harmonic coefficient of order 0 (aka a DC coefficient) provides a viewpoint independent color of the primitive, while a spherical harmonic coefficient of a higher order (aka an AC coefficient) provides a viewpoint dependent color of the primitive;
- an opacity value, denoted by *o*;
- a scaling factor, represented by scaling values denoted by *sₓ, s_{y}, s_{z};* and
- a 3D rotation, represented by a 4-dimensional quaternion *q₁, q₂, q₃, q₄.*

As illustrated in Table 1, the above attributes of a Gaussian primitive can be translated into attributes that are V3C standard compliant:
- one 3D attribute X indicating position;
- one 3D attribute SH₀ for the DC spherical harmonic coefficients, and fifteen 3D attributes SH₁ ... SH₁₅ for the AC spherical harmonic coefficients;
- one 1D attribute O indicating opacity;
- one 3D attribute S indicating scale; and
- one 3D attribute indicating rotation (i.e., normalized quaternions whose fourth component is deduced from the three other ones, as the sum of the 4 components equals to 1).

**Table 1: Attributes for the 3DGS profile**

| **Attributs** | | **Type** | **Dimension** | **Number** | **Index** |
|---|---|---|---|---|---|
| Position | X | ATTR_POSITION | 3 | 1 | 0 |
| Spherical harmonics DC | SH[0] | ATTR_TEXTURE | 3 | 1 | 1 |
| Spherical harmonics AC | SH[1]... SH[15] | ATTR_TEXTURE | 3 | 15 | 2..16 |
| Opacity | O | ATTR TRANSPARENCY | 1 | 1 | 17 |
| Scale | S | ATTR_SCALE | 3 | 1 | 18 |
| Rotation | Q | ATTR ROTATION | 3 | 1 | 19 |

Attribute types of texture (color) and of transparency are already defined in the V3C standard, with identifiers ATTR_TEXTURE and ATTR_TRANSPARENCY (see, Table 4, Section 8.4.4.5 of the V3C standard, hereinafter "V3C Attribute Types").

**Table 2: V3C Attribute Types**

| **ai_attribute_type_id[ j ][ i ]** | **Identifier** | **Attribute type** |
|---|---|---|
| 0 | ATTR_TEXTURE | Texture |
| 1 | ATTR_MATERIAL_ID | Material ID |
| 2 | ATTR_TRANSPARENCY | Transparency |
| 3 | ATTR_REFLECTANCE | Reflectance |
| 4 | ATTR_NORMAL | Normals |
| 5..14 | ATTR_RESERVED | Reserved |
| 15 | ATTR_UNSPECIFIED | Unspecified |

The 3DGS profile, disclosed herein, extends the V3C attribute types shown in Table 2, adding definitions for new attribute types. Thus, in an aspect, the following definitions can be added:
- ATTR _POSITION indicates an attribute that contains position information of a 3D primitive in the 3D coordinate system of a volumetric frame.
- ATTR_SCALE indicates an attribute that contains scaling information along the 3 dimensions of a 3D primitive.
- ATTR_ROTATION indicates an attribute that contains information about the 3D rotation of a 3D primitive in the coordinate system of a volumetric frame, represented with a normalized quaternion.

Producing a video-based representation of 3DGS involves organizing the attributes of the Gaussian primitives into 2D video frames. The encoder decides which pixel location *(iₖ, jₖ)* is used to store the attributes of which Gaussian *G(k),* indexed by *k.* Consequently, all the 20 attributes (shown in Table 1) of this given Gaussian *G(k)* are stored in the same pixel location in their corresponding video frame (i.e., atlas frame).

The atlas frame width and height are indicated, respectively, by **vps_frame_width**[ atlasID ] and **vps_frame_height**[ atlasID ]. The number of Gaussians that can be represented in an atlas (with index atlasID) is limited by that atlas size - that is, **vps_frame_width**[ atlasID ] × **vps_frame_height**[ atlasID ]. If the number of Gaussians is less than the frame size, the atlas frame can be padded with "dummy" Gaussians that are fully transparent by indicating an opacity value equal to 0. If the number of Gaussians exceeds a maximum frame size, the Gaussians can be split into several atlases, each atlas is used to store the attributes of part of the Gaussians. Typically, a maximum frame size (e.g., 4K) is imposed by the capacities of video decoders and is usually specified by different "levels" of a standard profile.

The V3C standard enables splitting video-based information into a multiplicity of rectangular patches of varying dimensions, which are then organized into the atlas frame in a given layout that is transmitted to the decoder in the atlas metadata. In an aspect, a bitstream conforming to the 3DGS profile can be restricted to map the Gaussian attributes to a single patch in a single atlas frame.

A direct implementation of the above-described scheme would require as many video streams as the number of attribute types defined in the 3DGS profile (as shown in Table 1). Furthermore, if the maximum frame size is not large enough to store all the Gaussian primitives, the number of video streams may further increase. That is, at least 20 video streams should be generated and as many decoder instantiations should be executed; such workload may not be supported by low-end consumer devices. Fortunately, the V3C standard offers a "frame packing" functionality enabling the combination of several video streams into one, before video encoding (see, sections 8.3.4.7, 8.4.4.7, B.4 of the V3C standard). At the decoder end, those video components are unpacked after video decoding of the packed stream.

For example, a 3D scene can be modeled with a maximum of 65K Gaussians, which may be sufficient to represent a low complexity content (e.g., a scene with a single object). This 3DGS model can be mapped into a 256×256 frame, resulting in 20 video streams each of which carrying one of 20 attributes of the Gaussian primitives. Or the 20 attributes can be mapped (packed) into a single video stream with a frame size of 1,300K (that is, 20 attributes times 65K Gaussian primitives), thus requiring one instantiation of a video decoder with a 2K buffer size capacity. Hence, for larger models, combining several atlases, using the frame packing functionality of the V3C standard, can drastically reduce the required number of video decoder instantiations.

Table 3 shows a 3DGS profile example with the above-described constraints, illustrating the allowable values of syntax elements of the 3DGS profile.

**Table 3: 3DGS Profile Example**

| **Syntax element** | **3DGS profile** |
|---|---|
| (...) | |
| vps_occupancy_video_present_flag[ atlasID ] | 0 |
| vps_geometry_video_present_flag[ atlasID ] | 0 |
| vps_attribute_video_present_flag[ atlasID ] | 0 |
| vps_packed_video_present_flag[ atlasID ] | 1 |
| (...) | |
| pin_attribute_present_flag[ atlasID ] | 1 |
| pin_attribute_count[ atlasID ] | 20 |
| pin_attribute_type_id[ atlasID ][ 0 ] | ATTR_POSITION |
| pin_attribute_type_id[ atlasID ][ 1 .. 16 ] | ATTR_TEXTURE |
| pin_attribute_type_id[ atlasID ][ 17 ] | ATTR_TRANSPARENCY |
| pin_attribute_type_id[ atlasID ][ 18 ] | ATTR_SCALE |
| pin_attribute_type_id[ atlasID ][ 19 ] | ATTR_ROTATION |
| pin_attribute_dimension_minus1[ atlasID ][ 0 ] | 2 |
| pin_attribute_dimension_minus1[ atlasID ][ 1 .. 16 ] | 2 |
| pin_attribute_dimension_minus1[ atlasID ][ 17 ] | 0 |
| pin_attribute_dimension_minus1[ atlasID ][ 18 ] | 2 |
| pin_attribute_dimension_minus1[ atlasID ][ 19 ] | 2 |
| (...) | |

Syntax element **vps_occupancy_video_present_flag**[ atlasID ] and syntax element **vps_geometry_video_present_flag**[ atlasID ] are equal to 0 to indicate that there is neither an occupancy video nor a geometry video for the atlas that is identified by atlasID. Syntax element **vps_attribute_video_present_flag**[ atlasID ] is equal to 0 to indicate that there is no attribute video carrying a single attribute, but syntax element **vps_packed_video_present_flag**[ atlasID ] is equal to 1 to indicate that there is a packed video carrying several attributes packed in the same video frame for the atlas identified by atlasID. The pin-prefixed other syntax elements specify the packed video frame of the atlas that is identified by atlasID. Syntax element **pin_attribute_present_flag**[ atlasID ] is equal to 1 to indicate that packed video frames do contain regions with attribute data. Syntax element **pin_attribute_count**[ atlasID ] is equal to 20 to indicate that there are 20 attributes with unique attribute types present in the packed video frames. Syntax element **pin_attribute_type_id**[ atlasID ][ 0 ] is equal to ATTR_POSITION and syntax element **pin_attribute_dimension_minus1**[ atlasID ][ 0 ] is equal to 2 to indicate that an attribute with index 0 is a position attribute with a dimension that is equal to 3. Syntax elements **pin_attribute_type_id**[ atlasID ][ 1..16 ] are equal to ATTR_TEXTURE and syntax element **pin_attribute_dimension_minus1**[ atlasID ][ 1..16 ] are equal to 2 to indicate that attributes with indices between 1 and 16 are texture (color) attributes with dimensions that are equal to 3. Syntax element **pin_attribute_type_id**[ atlasID ][ 17 ] is equal to ATTR_TRANSPARENCY and syntax element **pin_attribute_dimension_minus1**[ atlasID ][ 17 ] is equal to 0 to indicate that an attribute with index 17 is a transparency attribute with a dimension that is equal to 1. Syntax element **pin_attribute_type_id**[ atlasID ][ 18 ] is equal to ATTR_SCALE and syntax element **pin_attribute_dimension_minus1**[ atlasID ][ 18 ] is equal to 2 to indicate that an attribute with index 18 is a scale attribute with a dimension that is equal to 3. Syntax element **pin_attribute_type_id**[ atlasID ][ 19 ] is equal to ATTR_ROTATION and syntax element **pin_attribute_dimension_minus1**[ atlasID ][ 19 ] is equal to 2 to indicate that an attribute with index 19 is a rotation attribute with a dimension that is equal to 3.

In an aspect, information about the input views can be conveyed in the bitstream. To that end, supplemental information associated with the generation of a 3DGS model can be conveyed using the V3C or MIV syntax. For example, information about the intrinsic and extrinsic parameters of the cameras used to capture the input views from which the 3DGS model was learned can be conveyed using the V3C and MIV syntax. These camera parameters can be useful for post-decoding processing, for example, to exclude from the virtual exploration of the 3D scene the regions which are not captured by the cameras and therefore not well represented in the 3DGS model. The MIV extension of V3C defines an **miv_view_params_list( )** syntax structure which allows for specifying the extrinsic and intrinsic camera parameters, defining their pose and projection model respectively, for an arbitrary number of cameras (see, section 8.3.9.6.2 of the MIV standard). This could be reused advantageously to transport the camera parameters of the input views used to generate the 3DGS model.

In another aspect, information regarding the viewing space can be conveyed in the bitstream. The MIV standard also enables specifying the portion of the space (possibly completed by viewing direction constraints) where the viewport can be rendered with high quality. This is done with the viewing space SEI message (see, sections F2.1 & F.3.3 of the MIV standard). Such SEI message can be reused as is, with respect to a 3DGS model, to guide the rendering.

An alternative to conveying the 3DGS model in a bitstream that is compliant with the V3C standard or the MIV standard, as described above, is to use 2D video standards to code frames of 2D images containing the Gaussian attributes together with an SEI message. Such an SEI message would carry all the necessary information to interpret a decoded video containing the 3DGS attributes and to reconstruct therefrom the 3DGS model.

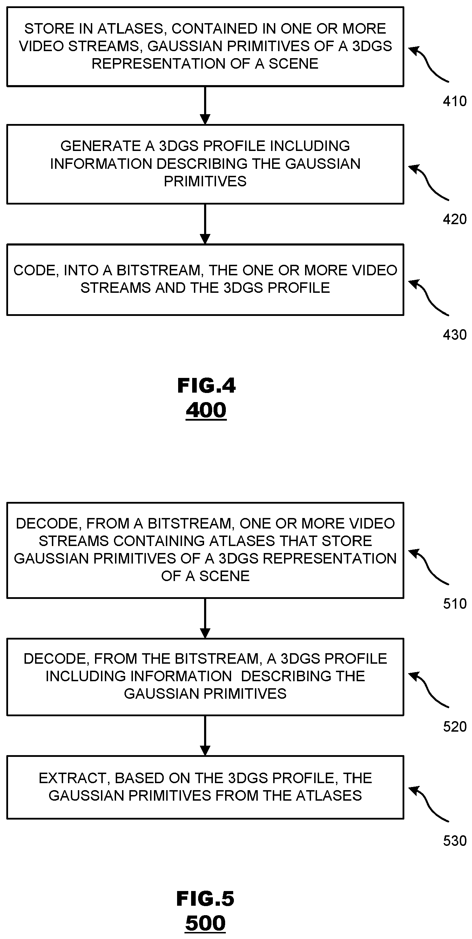

FIG. 4 is a flow diagram illustrating an example method for encoding volumetric data 400. The method 400 may begin, in step 410, with storing in atlases Gaussian primitives of a 3DGS representation of a scene. These atlases are 2D images of respective frames from one or more video streams. For example, the storing of Gaussian primitives may be performed by the mapping unit 240, as described herein with respect to FIG. 2. In step 420, a 3DGS profile, containing information describing the Gaussian primitives, may be generated. Then, in step 430, the one or more video streams and the 3DGS profile may be coded into a bitstream. In an aspect, the bitstream is MIV standard compliant or V3C standard compliant.

FIG. 5 is a flow diagram illustrating an example method for decoding volumetric data 500. The method 500 may begin, in step 510, with decoding, from a bitstream (e.g., provided by the encoder 400 of FIG. 4) one or more video streams containing atlases that store Gaussian primitives of a 3DGS representation of a scene. In step 520, a 3DGS profile, describing the Gaussian primitives, may be further decoded from the bitstream. Then, in step 530, based on the 3DGS profile, the Gaussian primitives may be extracted from the atlases. The Gaussian primitives can then be used to render the scene they represent from a desired viewing direction (as demonstrated in Kerbl).

The 3DGS profile may comprise a syntax element indicating that an atlas (of the atlases used for storing the Gaussian primitives), identified by an atlas ID, is an attribute atlas. The 3DGS profile may also comprise syntax elements indicating, respectively, that the identified atlas is not a geometry atlas or an occupancy atlas. Furthermore, the 3DGS profile may comprise a syntax element indicating the number of attributes associated with the identified atlas. For each of these attributes, the 3DGS profile may comprise a syntax element indicating a dimension of the attribute and a syntax element indicating an attribute type. An attribute type may be of: a position attribute associated with a position of a Gaussian primitive; a scale attribute associated with a scale of a Gaussian primitive; and/or a rotation attribute associated with a rotation of a Gaussian primitive (see, Table 1). The 3DGS profile may comprise a syntax element indicating that all attribute atlas frames are packed in a single video frame (see, Table 3).

The illustrations of the aspects described herein are intended to provide a general understanding of the structure, function, and operation of the various aspects. The illustrations are not intended to serve as a complete description of all of the elements and features of apparatuses and systems that utilize the structures or methods described herein. Many other aspects may be apparent to those of skill in the art upon reviewing the disclosure. Other aspects may be utilized and derived from the disclosure, such that structural and logical substitutions and changes may be made without departing from the scope of the disclosure. Accordingly, the disclosure and the figures are to be regarded as illustrative rather than restrictive.

The description of the aspects is provided to enable the making or use of the aspects. Various modifications to these aspects will be readily apparent, and the generic principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

## Claims

1. A method for encoding volumetric data, comprising:
storing in atlases, contained in one or more video streams, Gaussian primitives of a 3DGS representation of a scene;
generating a 3DGS profile including information describing the Gaussian primitives; and
coding, into a bitstream, the one or more video streams and the 3DGS profile.

2. An apparatus for encoding volumetric data, comprising:
at least one processor; and
memory storing instructions that, when executed by the at least one processor, cause the apparatus to:
store in atlases, contained in one or more video streams, Gaussian primitives of a 3DGS representation of a scene,
generate a 3DGS profile including information describing the Gaussian primitives, and
code, into a bitstream, the one or more video streams and the 3DGS profile.

3. A method for decoding volumetric data, comprising:
decoding, from a bitstream, one or more video streams containing atlases that store Gaussian primitives of a 3DGS representation of a scene;
decoding, from the bitstream, a 3DGS profile including information describing the Gaussian primitives; and
extracting, based on the 3DGS profile, the Gaussian primitives from the atlases.

4. An apparatus for decoding volumetric data, comprising:
at least one processor; and
memory storing instructions that, when executed by the at least one processor, cause the apparatus to:
decode, from a bitstream, one or more video streams containing atlases that store Gaussian primitives of a 3DGS representation of a scene,
decode, from the bitstream, a 3DGS profile including information describing the Gaussian primitives, and
extract, based on the 3DGS profile, the Gaussian primitives from the atlases.

5. The method according to claims 1 or 3, or the apparatus according to claim 2 or 4, wherein the bitstream is compliant with MPEG Immersive Video (MIV) standard or with Visual Volumetric Video-Based Coding (V3C) standard.

6. The method according to any one of claims 1, 3 or 5, or the apparatus according to any one of claims 2 or 4-5, wherein the 3DGS profile comprises a syntax element indicating that an atlas, of the atlases, identified by an atlas ID, is an attribute atlas.

7. The method according to claim 6, or the apparatus according to claim 6, wherein the 3DGS profile comprises a syntax element indicating a number of attributes that are associated with the atlas.

8. The method according to claim 7, or the apparatus according to claim 7, wherein the 3DGS profile comprises a syntax element indicating, for an attribute of the attributes associated with the atlas, a dimension of the attribute.

9. The method according to claim 7, or the apparatus according to claim 7, wherein the 3DGS profile comprises a syntax element indicating, for an attribute of the attributes associated with the atlas, an attribute type.

10. The method according to claim 9, or the apparatus according to claim 9, wherein the attribute type is of a position attribute associated with a position of a Gaussian primitive.

11. The method according to claim 9, or the apparatus according to claim 9, wherein the attribute type is of a scale attribute associated with a scale of a Gaussian primitive.

12. The method according to claim 9, or the apparatus according to claim 9, wherein the attribute type is of a rotation attribute associated with a rotation of a Gaussian primitive.

13. The method according to any one of claims 6 to 12, or the apparatus according to any one of claims 6 to 12:
wherein the 3DGS profile comprises a syntax element indicating that the atlas is not a geometry atlas.

14. The method according to any one of claims 6 to 13, or the apparatus according to any one of claims 6 to 13:
wherein the 3DGS profile comprises a syntax element indicating that the atlas is not an occupancy atlas.

15. The method according to any one of claims 6 to 14, or the apparatus according to any one of claims 6 to 14:
wherein the 3DGS profile comprises a syntax element indicating that all attribute atlas frames are packed in a single video frame.
